# FASCICULE DE BREVET EUROPEEN

(11) **EP 2 418 552 B1**
(45) Date de publication et mention de la délivrance du brevet: **16.11.2016**
(21) Numéro de dépôt: 10171077.0
(22) Date de dépôt: 28.07.2010
(51) Int. Cl.: G05B 19/042, G06F 11/36

(54) **Dispositif de circuits de commande d'électronique de puissance**
Vorrichtung mit Steuerschaltkreisen für Leistungselektronik
Device with power electronics control circuits

(43) Date de publication de la demande: 15.02.2012
(73) Titulaire: THALES, 92400 Courbevoie (FR)
(72) Inventeur: Fossion, Marc, B5140 Ligny (BE); Durvaux, Marc, B6110 Montigny-le-Tilleul (BE)
(74) Mandataire: Brunelli, Gérald

(56) Documents cités:
- EP-A2- 2 009 526
- WO-A1-2007/109894
- GB-A- 2 195 038
- RICHARD BERGER ET AL: "The RAD6000MC System-on-Chip Microcontroller for Spacecraft Avionics and Instrument Control" AEROSPACE CONFERENCE, 2008 IEEE, IEEE, PISCATAWAY, NJ, USA, 1 mars 2008 (2008-03-01), pages 1-14, XP031256331 ISBN: 978-1-4244-1487-1

## Description

L'invention porte sur un dispositif de circuits de commande d'électronique de puissance.

Il existe de nombreux circuits de commande d'électronique de puissance, mais très peu qui soient adaptés notamment à un système aérospatial tel un satellite. En effet de tels circuits de commande d'électronique de puissance étant fabriqués en très petite séries, et très personnalisées ou dédiées à une utilisation.

En outre, ces circuits de commande doivent répondre à des exigences très élevées de fiabilité en environnement à fortes contraintes.

Il est actuellement connu des circuits de commande d'électronique de puissance réalisés à partir de composants analogiques discrets ou à faible niveau d'intégration, tels des amplificateurs opérationnels, comparateurs ou bascules logiques. De tels circuits doivent être profondément modifiés à chaque évolution des besoins clients, et les composants périphériques discrets (résistances & capacités) doivent être ajustés pour chaque équipement durant sa production.

Compte tenu de la variété des composants nécessaires et des délais d'approvisionnement pour des composants de qualité suffisante pour respecter les normes aérospatiales, ces dispositifs existants engendrent des stocks importants présentant un faible taux de rotation.

En outre le coût de la main d'oeuvre associée est très élevé et représente une part importante du produit final.

Il est également connu de l'article "The RAD6000MC System-on-Chip Microcontroller for Spacecraft Avionics and Instrument Control" de Richard Berger (AEROSPACE CONFERENCE, 2008 IEEE) un circuit intégré de commande d'électronique de puissance apte à être embarqué à bord d'un système aérospatial.

Un but de l'invention est de proposer un dispositif de circuits de commande d'électronique de puissance, de conception de coût réduit, apte à être embarqué à bord d'un système aérospatial.

Aussi, il est proposé, selon un aspect de l'invention, un dispositif de circuits de commande d'électronique de puissance selon la revendication 1.

Un tel dispositif, réalisé avec mémoire non volatile ou rémanente, et intégrant des entités logiques distinctes résistantes aux radiations, est particulièrement bien adapté au domaine aérospatial, tels l'aviation, les lanceurs/missiles ou le spatial, voire à la robotique en environnement soumis aux radiations. En outre le coût de réalisation est limité et l'adaptabilité est fortement améliorée. En outre, on peut prouver aisément la fiabilité d'un tel dispositif, ce qui est nécessaire pour le domaine spatial et plus généralement pour le domaine aérospatial. De surcroît, un tel dispositif consomme une quantité d'énergie limitée.

Un tel dispositif est particulièrement bien adapté à la gestion de l'énergie électrique et à la mécatronique, ce qui n'exclu pas l'utilisation pour des applications non liées à de la gestion de puissance électrique comme la réalisation de capteurs intelligents ou autres applications classiques des microcontrôleurs.

En outre, la séparation physique de ces entités, permet à chacune d'elle de fonctionner en mode normal ou dégradé, même en cas de panne d'une entité voisine.

Dans un mode de réalisation, lesdites entités physiques hardware distinctes comprennent, en outre, une unité analogique de protection en température, tension électrique, et en courant électrique pour éviter des dégâts au dispositif et/ou à un système lié, durcie pour résister aux effets des radiations dans l'espace.

Ainsi, l'application peut résister à une panne unique en évitant la propagation d'un défaut.

Dans un mode de réalisation, le dispositif comprend, en outre, un ensemble comprenant une mémoire partagée et des moyens de gestion d'accès à ladite mémoire partagée, pour gérer les communications selon un mécanisme de type boîte aux lettres, entre une entité physique hardware du dispositif avec une autre entité physique hardware du dispositif.

On entend par communication selon un mécanisme de type boîte aux lettres ou "mailbox" en langue anglo-saxonne, un échange d'informations entre entités physiques hardware tel que l'entité émettrice écrit les données de son message dans une mémoire partagée à l'instant ou son processus interne le permet, et l'entité destinataire relis les données du message à un autre instant postérieur défini uniquement par son propre processus interne. Il en résulte une communication asynchrone: l'émetteur ne doit pas attendre que le destinataire soit prêt à recevoir le message et le destinataire n'est pas interrompu dans son travail par la gestion d'une arrivée de message.

Ainsi, le risque de problème de fonctionnement est fortement limité, par une augmentation de la ségrégation de fonctionnement des entités physiques hardware. En effet, on évite ainsi que l'exécution d'une tâche en cours d'exécution dans l'une des entités physiques hardware soit retardée en raison d'information provenant de l'extérieur de l'entité.

Selon un mode de réalisation, le dispositif comprend des registres de mémoire rémanents, un registre de mémoire comprenant un code correcteur dédié pour améliorer la résistance aux effets des radiations dans l'espace.

Ainsi, la configuration de l'équipement peut être réalisée sur la ligne de production (par enregistrement de paramètres dans la mémoire) sans avoir à remplacer des composants après mesure des performances globales de l'équipement (les composants ajustables ne sont pas utilisables car trop sensibles aux vibrations).

Dans un mode de réalisation, lesdits moyens de gestion d'accès sont adaptés pour effectuer une gestion desdites communications de manière statique et prédéfinie dans lesdits registres de mémoire rémanents.

On entend par gestion statique prédéfinie le fait que l'espace de mémoire réservé à l'échange des données, bien qu'il dépende de l'application, est, pour une application donnée, prédéfini dans la configuration stockée dans la mémoire rémanente numérique. Cette configuration est utilisée par les moyens matériels (hardware) de gestion d'accès associés à la mémoire partagée pour autoriser ou verrouiller l'accès à la mémoire.

Ainsi, le risque de problème de fonctionnement est fortement limité, par une augmentation de la ségrégation de fonctionnement des entités physiques hardware. En effet, une exécution erronée dans l'une des entités physiques hardware ne peut transmettre d'informations vers des destinataires avec qui elle ne devrait jamais échanger d'informations. Les chemins de communication possibles et les débits d'information associés sont donc connus à l'avance, ce qui permet à chaque entité physique hardware de travailler dans un contexte entièrement déterministe. Il est donc possible pour le concepteur d'explorer tous les cas de fonctionnement et de prouver l'absence d'erreur dans le processus de fonctionnement de chaque entité physique hardware.

Dans un mode de réalisation, lesdites unités numériques de régulation rapide, de communication, de traçage et de débogage, et l'unité analogique de protection, comprennent des machines à états finis.

La réalisation sous forme de machines à états finis permet de garantir que le dispositif ne pourra entrer dans un état imprévu, et de permettre une validation systématique avec une couverture à 100%.

Par exemple, lesdites machines à états finis sont réalisées par des séquenceurs à exécution d'instructions linéaires.

Un séquenceur n'exécutant que des instructions linéaires, notamment dépourvues de boucles de programmation, ce qui limite drastiquement les risques de bogues informatiques dans le dispositif.

Selon un mode de réalisation, il est également proposé un système aérospatial comprenant au moins un dispositif tel que décrit précédemment, dans lequel un sous-ensemble desdites unités peut être mis en redondance.

Le système aérospatial peut ainsi rester totalement opérationnel malgré une panne partielle.

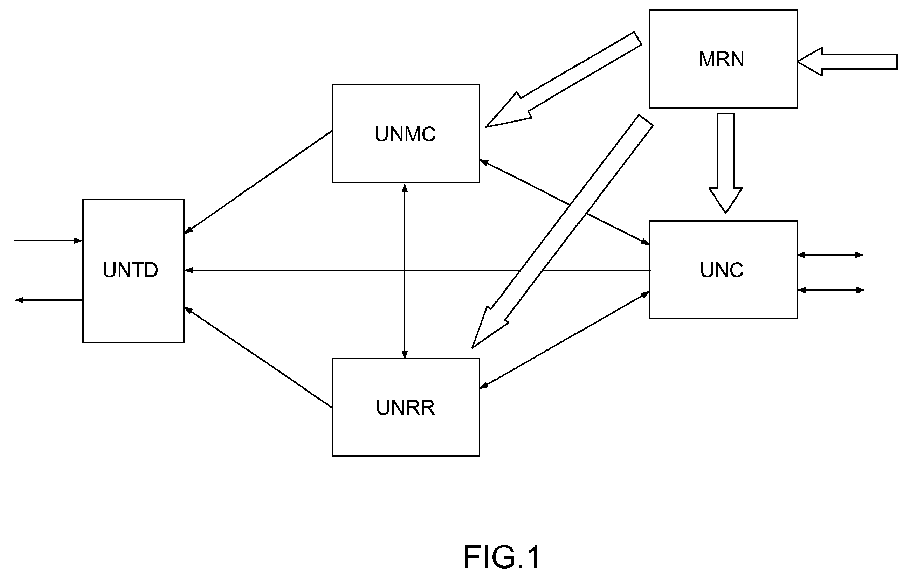

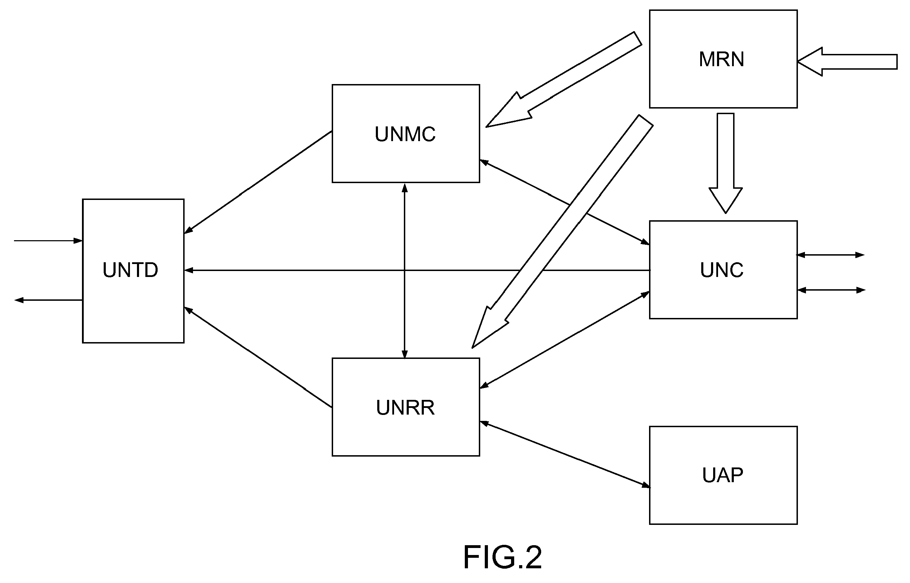

L'invention sera mieux comprise à l'étude de quelques modes de réalisation, décrits à titre d'exemples nullement limitatifs, et illustrés par les dessins annexés sur lesquels les figures 1 et 2 représentent schématiquement un dispositif de circuits de commande d'électronique de puissance selon deux aspects de l'invention.

Sur la figure 1 est représenté schématiquement un dispositif de circuits de commande d'électronique de puissance selon un aspect de l'invention, comprenant les entités physiques hardware distinctes suivantes communicant entre-elles :
- une unité numérique microcontrôleur UNMC pour gérer le fonctionnement du dispositif, résistante aux radiations ;
- une unité numérique de régulation rapide UNRR pour commander des processus prioritaires et temps réel, résistante aux radiations ;
- une unité numérique de communication UNC avec l'extérieur du dispositif, résistante aux radiations ;
- une unité numérique de traçage et de débogage UNTD pour détecter des erreurs lors de la conception du dispositif ; et
- une mémoire rémanente numérique MRN pour mémoriser une information représentative de la configuration initiale du dispositif, résistante aux radiations.

Le mode de réalisation de la figure 2 comprend, en outre, une unité analogique de protection UAP en température, tension électrique, et en courant électrique, pour éviter des dégâts au dispositif et/ou à un système lié, résistante aux radiations.

Dans la présente description, le terme traçage signifie un suivi de traitement dans lequel le déroulement d'un programme informatique est visualisé sur un support, et le terme débogage signifie une correction d'une erreur de programmation informatique, ou "bug" en langue anglo-saxonne, d'un programme informatique.

L'unité numérique microcontrôleur UNMC est consacrée à la commande de niveau supérieur d'équipements concernant la gestion de l'alimentation énergétique, et est essentiellement asynchrone. L'unité numérique microcontrôleur UNMC permet notamment de gérer le fonctionnement de l'alimentation en énergie d'un système auquel est lié le dispositif. L'unité numérique microcontrôleur UNMC est utilisée pour exécuter des algorithmes trop complexes pour l'unité de régulation rapide UNRR et qui n'exigent pas la vitesse de traitement qu'offre l'UNRR. Elle offre aussi une dimension de flexibilité accrue pour faire face à des applications futures.

A titre d'exemples, l'unité numérique microcontrôleur UNMC est particulièrement adaptée au traitement des séquences de démarrage, du changement des paramètres de lois de régulation (suivi du point de puissance maximal d'un panneau solaire), ou de la gestion du cycle de charge/décharge d'une batterie.

L'unité numérique microcontrôleur UNMC est typiquement constituée d'un coeur microcontrôleur standard dont la logique a été durcie pour résister aux radiations spatiales, et possède des mécanismes de vote interne et de correction d'erreur.

L'unité numérique de régulation rapide UNRR permet notamment de gérer des processus prioritaire et extrêmement rapides. Il s'agit d'une unité synchrone.

L'unité numérique de régulation rapide UNRR comprend une logique optimisée pour le traitement numérique du signal dans une boucle de régulation. Elle est synchronisée sur les mesures des grandeurs analogiques présentes en amont de convertisseurs analogique vers numérique, qui servent d'entrées au calcul de la régulation. Ses sorties servent à contrôler des logiques de modulation en largeur d'impulsion. Les sorties de ces logiques sont directement connectées aux circuits d'amplification qui pilotent les éléments de commutation de puissance.

L'unité numérique de régulation rapide UNRR est typiquement constituée de registres, et d'unités arithmétiques et logiques optimisés pour le traitement numérique du signal en nombre entiers, le tout cadencé par un séquenceur configurable. La définition de l'algorithme de régulation se fait donc en définissant une séquence et des paramètres. Il est à noter que cette approche permet de gérer un changement simple mais rapide de loi de régulation sur une condition liée à une grandeur analogique mesurée.

L'unité numérique de communication UNC permet notamment de gérer les échanges de données, qu'ils soient synchrones ou asynchrones.

L'unité numérique de communication UNC étant programmable, celle-ci peut être adaptée à différents protocoles de communication. Comme elle est également distincte de L'unité numérique microcontrôleur UNMC et de l'unité numérique de régulation rapide UNRR, l'exécution des algorithmes de communication ne peut interférer avec les tâches confiées aux autres unités.

En matière de réalisation, l'unité numérique de communication UNC comprend une logique de sérialisation/dé-sérialisation des données, une logique de synchronisation de l'horloge de réception, une logique de génération de l'horloge d'émission, et une logique de calcul d'un code de détection d'erreur de transmission. Ces fonctions logiques sont organisées autour d'un séquenceur programmable, de registres et d'une unité arithmétique et logique élémentaire.

La mémoire rémanente numérique MRN permet notamment, lors de la mise sous tension de la puce numérique, de récupérer les données de configuration du dispositif, et de les distribuer dans le dispositif. Les séquences d'instructions exécutées par l'unité numérique de régulation rapide UNRR, pour le formatage ou mise en forme des messages, et pour la gestion des différentes unités du dispositif sont toutes extraites de la mémoire non-volatile numérique MRN durant la phase de remise à zéro initiale.

La mémoire rémanente numérique MRN contient une table des interactions permises et interdites entre les différentes unités du dispositif. Aussi, si l'une des unités n'est pas utilisée, la configuration permet de désactiver son fonctionnement ce qui entraine d'une part une consommation d'énergie réduite, et d'autre part une limitation du risque de dysfonctionnement indésirable de cette unité (réduction du risque d'erreur de propagation.

La mémoire rémanente numérique MRN est typiquement réalisée par de la mémoire effaçable et programmable électriquement avec de la redondance pour permettre la correction d'erreurs dans la mémorisation. Cette mémoire est associée à une logique de correction d'erreurs qui est activée lors de la lecture de la mémoire au démarrage du dispositif.

L'unité analogique de protection UAP est réalisée sur la puce analogique, ainsi, une perte complète de la fonction de régulation, située sur la puce numérique n'entraîne pas de propagation d'erreur aux autres unités du dispositif. Cette unité de protection UAP permet notamment une protection en tension électrique du dispositif (pour éviter qu'un excès de tension électrique puisse être envoyé au dispositif ou au système lié au dispositif), une protection en courant électrique (pour éviter qu'un excès de courant électrique puisse être envoyé au dispositif ou au système lié au dispositif), et une protection en température (pour éviter d'endommager d'autres équipements par des sauts de température).

Classiquement, le traçage et le débogage permet d'aider le concepteur du dispositif lors des essais et réglages du dispositif. La mise en oeuvre de traces et de débogage est basée sur les interruptions et drapeau qui peuvent être ajoutés dans les suites d'instructions numériques pour que le concepteur puisse lire des valeurs de l'état interne du dispositif. Une telle approche n'est pas possible pour des applications aérospatiales, critiques, ou de grande fiabilité. En effet, la méthode d'observation influence évidemment le système qui est observé.

Le traçage et le débogage mis en oeuvre dans le dispositif sont totalement transparents pour l'application. Cela signifie que, par une architecture appropriée du dispositif, l'observation des valeurs de l'état interne du dispositif n'influe pas sur le comportement global du dispositif. Les variables sont seulement lues par l'unité de traçage et de débogage UNTD.

A la différence de la conception usuelle connue de traçage et de débogage, la présente unité de traçage et de débogage UNTD ne se limite pas à effectuer le suivi des variables internes au dispositif. En effet, elle peut aussi, de façon indépendante de l'unité numérique de régulation rapide UNRR, acquérir des grandeurs analogiques avec une base de temps propre. Cette fonctionnalité, qui est similaire à celle d'un oscilloscope enfoui dans l'équipement, permet, lors de la mise au point, d'observer le comportement de la boucle de régulation en relation avec d'autres grandeurs physiques (tensions, courants, température...).

L'objectif est de pouvoir observer le comportement du dispositif ou du système auquel il est lié, durant les phases de test de performances finals. Il faut donc que ces phases de test se fassent exactement dans l'état représentatif de l'utilisation finale. Pour ces raisons, l'unité de traçage et de débogage UNTD est alimentée par une alimentation externe (pas d'utilisation de la source d'alimentation en énergie de la puce numérique elle-même pour qu'il ne puisse pas être dit que cette consommation de courant électrique change le comportement du dispositif).

Ces fonctionnalités permettent des investigations dans des conditions d'accès difficile (équipement scellé et vide spatial : parmi les tests que subit un équipement spatial, il y a obligatoirement une phase de tests qui est exécutée dans des conditions reproduisant les conditions réelles d'environnement. Cela se fait en plaçant l'équipement en question dans un caisson où les conditions du vide spatial sont recréées.)

L'unité de traçage et de débogage UNTD est organisée autour d'un séquenceur programmable associé à des registres et une unité arithmétique et logique élémentaire. Il dispose d'une mémoire tampon qui permet de stocker des échantillons acquis à grande vitesse avant retransmission via l'unité numérique de communication UNC. Des compteurs permettent de générer une base de temps locale et de synchroniser une capture sur une occurrence d'évènements. Des comparateurs permettent de déclencher la capture sur une condition combinatoire présente à une de ses entrées. En entrée, elle a accès aux convertisseurs analogique-numérique et aux registres de l'unité numérique microcontrôleur UNMC et de l'unité numérique de régulation rapide UNRR.

De manière avantageuse, le dispositif comprend en outre, un ensemble comprenant une mémoire partagée et un module de gestion d'accès à ladite mémoire partagée, pour gérer les communications selon un mécanisme de type boîte aux lettres entre une entité physique hardware du dispositif avec une autre entité physique hardware du dispositif.

Le module de gestion d'accès est adapté pour effectuer une gestion statique desdites communications.

L'accès en lecture à une instruction écrite dans la mémoire partagée est réservé à l'entité à laquelle elle est destinée, tandis que l'accès en écriture est sans limitation pour l'ensemble des entités.

## Revendications

1. Dispositif de circuits de commande d'électronique de puissance comprenant les entités physiques hardware distinctes suivantes communicant entre-elles, assurant une amélioration de la ségrégation de fonctionnement desdites entités physiques hardware et un comportement déterministe :
- une unité numérique microcontrôleur (UNMC) configurée pour gérer le fonctionnement du dispositif, et durcie pour résister aux effets des radiations dans l'espace ;
- une unité numérique de régulation rapide (UNRR) configurée pour commander des processus prioritaires et temps réel, et durcie pour résister aux effets des radiations dans l'espace ;
- une unité numérique de communication (UNC) avec l'extérieur du dispositif, durcie pour résister aux effets des radiations dans l'espace ;
- une unité numérique de traçage et de débogage (UNTD) configurée pour détecter des erreurs lors de la conception du dispositif ;
- une mémoire rémanente numérique (MRN) configurée pour mémoriser une information représentative de la configuration initiale du dispositif, et durcie pour résister aux effets des radiations dans l'espace;
- un ensemble comprenant une mémoire partagée et des moyens de gestion d'accès à ladite mémoire partagée, configuré pour gérer les communications selon un mécanisme de type boîte aux lettres entre une entité physique hardware du dispositif avec une autre entité physique hardware du dispositif ; et
- des registres de mémoire rémanents, un registre de mémoire comprenant un code correcteur dédié configuré pour améliorer la résistance aux effets des radiations dans l'espace ;
lesdits moyens de gestion d'accès étant adaptés pour effectuer une gestion desdites communications de manière statique et prédéfinie dans lesdits registres de mémoire rémanents.

2. Dispositif selon la revendication 1, comprenant, en outre, une unité analogique de protection (UAP), en température, tension électrique, et en courant électrique, configurée pour éviter des dégâts au dispositif et/ou à un système lié, et résistante aux radiations.

3. Dispositif la revendication 2, dans lequel lesdites unités numériques de régulation rapide, de communication, de traçage et de débogage, et l'unité analogique de protection, comprennent des machines à états finis.

4. Dispositif selon la revendication 3, dans lequel lesdites machines à états finis sont réalisées par des séquenceurs à exécution d'instructions linéaires.

5. Système aérospatial, comprenant au moins un dispositif selon l'une des revendications précédentes, dans lequel un sous-ensemble desdites unités peut être mis en redondance.

## Patentansprüche

1. Vorrichtung mit Leistungselektronik-Steuerschaltkreisen, umfassend die untereinander kommunizierenden folgenden distinkten physischen Hardware-Instanzen, gewährleistend eine Verbesserung der Trennung des Betriebs der physischen Hardware-Instanzen und ein deterministisches Verhalten:
- eine digitale Mikrocontroller-Einheit (UNMC), konfiguriert, um den Betrieb der Vorrichtung zu verwalten, und gehärtet, um den Wirkungen der Strahlungen im Weltraum zu widerstehen;
- eine digitale Einheit zur schnellen Regelung (UNRR), konfiguriert, um prioritäre Prozesse und Echtzeit zu steuern, und gehärtet, um den Wirkungen der Strahlungen im Weltraum zu widerstehen;
- eine digitale Einheit zur Kommunikation (UNC) mit außerhalb der Vorrichtung, gehärtet, um den Wirkungen der Strahlungen im Weltraum zu widerstehen;
- eine digitale Einheit zum Tracing und Debugging (UNTD), konfiguriert, um Fehler während der Entwicklung der Vorrichtung zu erfassen;
- einen digitalen remanenten Speicher (MRN), konfiguriert, um eine Information, die für die initiale Konfiguration der Vorrichtung repräsentativ ist, zu speichern, und gehärtet, um den Wirkungen der Strahlungen im Weltraum zu widerstehen;
- eine Anordnung, umfassend einen gemeinsam genutzten Speicher und Mittel zur Verwaltung des Zugriffs auf den gemeinsam genutzten Speicher, konfiguriert, um die Kommunikationen gemäß einem Mechanismus vom Mailbox-Typ zwischen einer physischen Hardware-Instanz der Vorrichtung mit einer anderen physischen Hardware-Instanz der Vorrichtung zu verwalten; und
- remanente Speicherregister, wobei ein Speicherregister einen dedizierten Korrekturcode umfasst, konfiguriert, um den Widerstand gegen die Wirkungen der Strahlungen im Weltraum zu verbessern;
wobei die Mittel zur Verwaltung des Zugriffs dazu angepasst sind, eine Verwaltung der Kommunikationen in statischer und vordefinierter Weise in den remanenten Speicherregistern vorzunehmen.

2. Vorrichtung nach Anspruch 1, weiterhin umfassend eine analoge Einheit zum Schutz (UAP), vor Temperatur, elektrischer Spannung und elektrischem Strom, konfiguriert, um Schäden an der Vorrichtung und/oder einem verbundenen System zu vermeiden, und widerstandsfähig gegen die Strahlungen.

3. Vorrichtung nach Anspruch 2, wobei die digitalen Einheiten zur schnellen Regelung, zur Kommunikation, zum Tracing und Debugging, und die analoge Einheit zum Schutz, endliche Zustandsautomaten umfassen.

4. Vorrichtung nach Anspruch 3, wobei die endlichen Zustandsautomaten durch Sequencer zur Ausführung linearer Befehle realisiert sind.

5. Luft- und Raumfahrtsystem, umfassend zumindest eine Vorrichtung nach einem der vorstehenden Ansprüche, wobei eine Unteranordnung der Einheiten redundant angelegt sein kann.

## Claims

1. Device with power electronics control circuits comprising the following separate physical hardware entities which communicate with each other, ensuring an improvement of the segregation of operation of the physical hardware entities and a deterministic behaviour:
- a digital microcontroller unit (UNMC) which is configured to control the operation of the device and which is hardened in order to withstand the effects of radiation in space;
- a digital rapid control unit (UNRR) which is configured to control the priority and real-time processes and which is hardened in order to withstand the effects of radiation in space;
- a digital communication unit (UNC) which is for communication with the exterior of the device and which is hardened in order to withstand the effects of radiation in space;
- a digital tracing and debugging unit (UNTD) which is configured to detect errors during the design of the device;
- a non-volatile digital memory (MRN) which is configured to store information which is representative of the initial configuration of the device and which is hardened to withstand the effects of radiation in space;
- an assembly which comprises a shared memory and control means for access to the shared memory and which is configured to control the communications in accordance with a mechanism of the mailbox type between a physical hardware entity of the device with another physical hardware entity of the device; and
- non-volatile memory registers, a memory register comprising a dedicated correction code which is configured to improve the resistance to the effects of radiation in space;
the access control means being suitable for carrying out control of the communications in a static and predefined manner in the non-volatile memory registers.

2. Device according to claim 1, which further comprises an analogue protection unit (UAP) in terms of temperature, electrical voltage and electrical current, which unit is configured to prevent damage to the device and/or to a connected system and is resistant to radiation.

3. Device according to claim 2, wherein the digital units for rapid control, communication, tracing and debugging and the analogue protection unit comprise finite state machines.

4. Device according to claim 3, wherein the finite state machines are produced by means of sequencers for executing linear instructions.

5. Aerospace system, comprising at least one device according to any one of the preceding claims, wherein a sub-assembly of the units may be placed in a redundant state.
